Europäisches Patentamt

European Patent Office

Office européen des brevets

(19)

(11) Publication number: **0 365 298**

**A1**

(12) **EUROPEAN PATENT APPLICATION**

(21) Application number: **89310687.2**

(22) Date of filing: **18.10.89**

(51) Int. Cl.5: **B29C 53/84 , B32B 1/08 , B29C 53/56**

(30) Priority: **21.10.88 ZA 884401**

(43) Date of publication of application:
**25.04.90 Bulletin 90/17**

(84) Designated Contracting States:
**AT DE FR GB GR IT LU SE**

(71) Applicant: **CHEMTREND EQUIPMENT (PTY) LIMITED**
**34 Derrick Road**
**Spartan Transvaal(ZA)**

(72) Inventor: **Goss, Desmond Brian**
**10 Fairbridge Street**
**Farramere, Benoni, Transvaal(ZA)**
Inventor: **Stansfield, Derek**
**5 Cambridge Street**
**Farramere, Benoni, Transvaal(ZA)**
Inventor: **Fitzpatrick, Gerald James Justin**
**5 Sherwood Court, 75 Rheeder Street**
**Forest Hill, Transvaal(ZA)**

(74) Representative: **Wood, John Irwin et al**
**F.J. Cleveland & Company 40/43 Chancery Lane**
**London WC2A 1JQ(GB)**

(54) Method of overwrapping an article with a thermosetting resin.

(57) A method of overwrapping a thermoplastic article with a thermosetting resin is disclosed, comprising the steps of: cooling the article 10 to below ambient temperature; applying a layer of thermosetting resin 13 to the outer surface of the article; and allowing the thermosetting resin to cure.

EP 0 365 298 A1

FIG 4

# METHOD OF OVERWRAPPING AN ARTICLE WITH A THERMOSETTING RESIN

This invention relates to method of overwrapping thermoplastic articles with a synthetic resin. More particulary, this invention relates to a method of overwrapping thermoplastic articles for use in chemical plants with a reinforced thermosetting resin.

In chemical plants, highly corrosive substances are often conveyed in pipes, tubes or the like. These substances vary from highly acidic to highly alkaline and are understandably damaging to the pipes they are conveyed in.

Use is widely made today of steel pipes, lined on the inside with an inert plastic liner to convey corrosive substances in chemical plants. This type of arrangement suffers from various disadvantages. For example, the costs of the steel pipes and the seperately manufactured and inserted plastic liners are often prohibitively high. Another disadvantage is the fact that with this type of arrangement, only the inside of the pipe is made corrosion resistant, and not the outside. The corrosive environment of a chemical plant in some areas therefore often causes the steel pipe to corrode rapidly on the outside. A further problem associated with the above arrangement lies in the difference in coefficient of expansion between the steel pipe and its plastic liner.

To use a thermoplastic pipe on its own for the aforesaid purposes also has its disadvantages. The biggest problem with using a thermoplastic pipe such as a polypropylene pipe lies in its relatively high coefficient of expansion. The coefficient of expansion of a polypropylene pipe for example, is about ten times higher than that of a steel pipe and would have to be stiffened in some way to prevent significant expansion and consequent sagging of the pipe when e.g. conveying a heated substance. Another obvious problem with a thermoplastic pipe is its relatively low strength and pressure bearing capabilities compared to steel.

Various methods have been employed in the past to overwrap a thermoplastic pipe with a layer of reinforced themosetting resin in order to overcome the above problems. These methods, however, suffer inter alia, from the disadvantage that the thermosetting layer does not bond well to the outer surface of the pipe.

It is accordingly an object of the present invention to provide a method of overwrapping a thermoplastic article with a synthetic resin which applicant believes will overcome or at least minimize the problems and disadvantages of the known arrangements.

According to one aspect of the invention, a method of overwrapping a thermoplastic article with a thermosetting resin comprises the steps of:-
- cooling the article to below ambient temperature;
- applying a layer of thermosetting resin to the outer surface of the article; and
- allowing the thermosetting resin to cure.

Preferably, a reinforced thermosetting resin is applied to the outer surface of the article.

The article is preferably cooled to between $10°C$ and $20°C$ prior to applying the reinforced thermosetting resin.

Preferably also the method includes the further step of striating at least a portion of the surface of the article to be overwrapped prior to cooling the article and applying the reinforced thermosetting resin.

With the above arrangement, the article contracts slightly when cooled down. When the reinforced thermosetting resin is therefore applied to the outer surface of the article, the article is in a slightly contracted state. An exothermic reaction occurs when the thermosetting resin starts to cure and the heat energy radiated as a result of the exothermic reaction is absorbed by the article. This causes the article to expand slightly while the resin is curing. It will be appreciated that with the above arrangement, the expanding outer surface of the article causes the striations on the surface to key permanently into the resin, and when the resin has set, the outer surface bears outwardly against the resin coating. It is therefore not ordinarily possible to remove the resin overwrapping from the article, even if the article is in a symetric shape, such as a length of straight thermoplastic piping.

The article may be striated by cutting at least one groove into the outer surface thereof, and is preferably striated by cutting a continuous helical groove into the outer surface thereof by means of a lathe and cutting tool arrangement or the like.

The article may be a length of thermoplastic pipe.

With this arrangement, a thermoplastic pipe such as a polypropylene pipe may be overwrapped with a reinforced thermosetting resin in order to render its corrosion resistant, to curtail excessive linear expansion and contraction of the pipe and to increase its strength and pressure bearing capabilities.

The reinforced thermosetting resin may be applied to the article in the form of a fibreglass filament predipped in a thermosetting resin, the resin-carrying filament in use being wrapped around the pipe.

The resin-carrying filament may initially be wound at an angle of ninety degrees to the longitudinal axis of the pipe, whereafter it may be wound to and fro at an angle of fifty five degrees to the longitudinal axis of the pipe.

The resin-carrying filament is preferably wrapped onto the pipe until a layer of between 2mm and 10mm of filament and resin is applied to the outer surface of the pipe.

The thermosetting resin may be any one of a polyester-; vinylester-; isothalic-; or bisphenolic resin.

The method may include the further step of cleaning the outer surface of the article with a suitable solvent prior to applying the thermosetting resin to the outer surface thereof.

The article is preferably cooled down to below ambient temperature by placing it in a bath of solid $CO_2$.

The thermosetting resin may be cured by placing the overwrapped article under infra-red heater lamps.

According to another aspect of the invention, a thermoplastic article, overwrapped with a thermosetting resin as described is provided.

One embodiment of this invention will now be described in detail with reference to the accompanying drawings in which:-

Figure 1 - is a partly sectioned perspective view of a striated pipe to be overwrapped according to the invention;

Figures 2 & 3 are perspective views of the pipe of figure 1 at different stages of overwrapping; and

Figure 4 - is a partly sectioned perspective view of the pipe of figure 1 after it has been fully overwrapped according to the method of the invention.

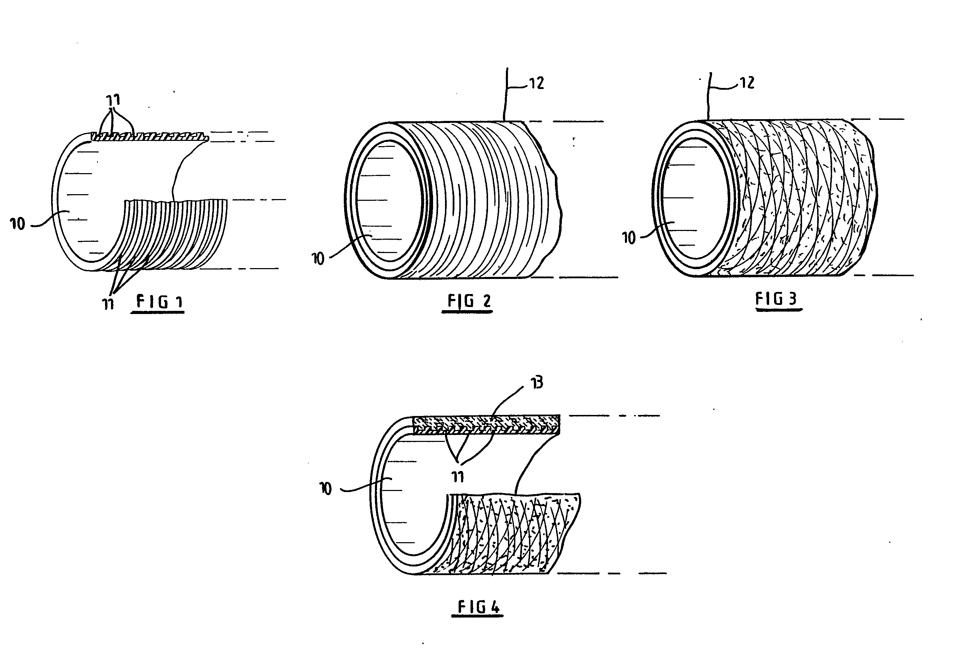

Referring now in particular to figure 1, a length of polypropylene pipe 10 with a wall thickness of about 3mm is provided and striated by placing the pipe 10 in a lathe (not shown) and cutting a continuous helical groove 11 into the outer surface of pipe 10. The groove 11 is cut 0.7mm deep by 1,2mm wide on a spiral pitch of 2,5mm. The corners of the groove are not entirely sharp but slightly rounded to minimise stress points or lines from which cracks may propagate. The pipe 10 is then thoroughly cleaned with a suitable organic solvent (not shown).

After cleaning, the pipe 10 is placed in a cold bath (not shown) containing dry blocks of $CO_2$ until the temperature of the pipe 10 is between 12°C and 15°C. The cooling operation usually lasts between 20 and 30 seconds, depending on the wall thickness and length of the pipe. The cooling causes the pipe to contract or shrink slightly.

The cooled pipe 10 is then located on a two axis controlled filament winding machine (not shown).

The controlled filament winding machine is well known and standard equipment in the art and is equipped with a supply of fibreglass filament and a reservoir of thermosetting resin. The principle of operation of the machine is to dip the fibreglass filament in the resin and then to wrap the resin-carrying filament onto the surface of the article to be overwrapped. The machine can be set to wrap the filament at different angles relative to the article.

In figure 2, a resin-carrying fibreglass filament 12 is shown to be initially wound by means of the winding machine (not shown) onto the pipe 10 at an angle of 90 degrees to the longitudinal axis of the pipe 10. The filament 12 thus penatrates and fills the groove 11. Once the groove 11 is filled with the resin and the filament 12, the winding machine is set at an angle of fifty five degrees to the longitudinal axis of the pipe and the filament 12 is wound to and fro along the length of the pipe 10 until a layer of 5 - 6 mm thick of fibreglass filament and resin is applied to the outer surface of the pipe 10 (see figure 3).

Once the desired layer thickness is attained, which is in practice dependant on the temperature and pressure bearing requirements of the final product, the overwrapped pipe 10 is removed from the winding machine.

During and after the winding operation, the resin starts to cure on the pipe 10. The setting of the resin, which may be any one of a polyester-, vinylester-, isothalic-, or bisphenolic-resin, causes an exothermic reaction to take place, thereby radiating heat energy which is absorbed by the pipe 10. This heat energy causes the temperature of the pipe 10 to increase with a resultant expansion of the pipe 10. The striated outer surface of the pipe 10 therefore expands and keys permanently into the reinforced resin overwrapping, and bears firmly against the overwrapping when it is fully cured.

After winding, the pipe 10 is pre-cured under infra-red heater lamps until the resin coating is dry enough to be handled. After the pre-cure, a post-curing period follows wherein the overwrapped pipe is left at ambient temperature until fully cured. The post-curing operation may alternatively also take place under infra-red heater lamps.

Figure 4 shows an overwrapped pipe 10 wherein the groove 11 is fully keyed into the layer 13 of fibreglass filament and resin.

Once the overwrapping operation as described above is completed, the layer 13 cannot be removed from the pipe 10. The overwrapping serves to stiffen the pipe 10, increases its overall strength and pressure bearing capabilities and curtails its expansion and contraction tendencies in use.

It will be appreciated that many modifications and/or variations of the invention may be possible without departing from the scope of the appended claims. For example, instead of striating the outer surface of the pipe with a helical groove, circular grooves, notches, knurls or burrs, etc., may be applied. Also, T-joints, elbow joints or other types of pipe fittings may be overwrapped by means of this method.

## Claims

1. A method of overwrapping a thermoplastic article with a thermosetting resin comprising the steps of:
cooling the article to below ambient temperature;
applying a layer of thermosetting resin to the outer surface of the article; and
allowing the thermosetting resin to cure.

2. A method as claimed in claim 1 wherein a reinforced thermosetting resin is applied to the outer surface of the article.

3. A method as claimed in claims 1 or 2 wherein the article is cooled to between 10° C and 20° C prior to applying the thermosetting resin.

4. A method as claimed in any one of claims 1 to 3 including the further step of striating at least a portion of the surface of the article to be overwrapped prior to cooling the article and applying the thermosetting resin.

5. A method as claimed in claim 4 wherein the surface is striated by cutting at least one groove therein.

6. A method as claimed in claim 5 wherein the surface is striated by cutting a continuous helical groove therein.

7. A method as claimed in any one of claims 1 to 6 wherein the article comprises a length of thermosplastic pipe.

8. A method as claimed in claim 7 wherein the reinforced thermosetting resin is applied to the pipe in the form of a fibreglass filament predipped in a thermosetting resin, the resin-carrying filament in use being wrapped around the pipe.

9. A method as claimed in claim 8 wherein the resin-carrying filament is initially wound at an angle of ninety degrees to the longitudinal axis of the pipe whereafter it is wound to and fro at an angle of fifty five degrees to the longitudinal axis of the pipe.

10. A method as claimed in claims 8 or 9 wherein the resin-carrying filament is wrapped onto the pipe until a layer of between 2mm and 10mm of filament and resin is applied to the outer surface of the pipe.

11. A method as claimed in any one of claims 1 to 10 wherein the thermosetting resin comprises any one of a polyester-; vinylester-; isothalic-; or bisphenolic resin.

12. A method as claimed in any of the previous claims including the further step of cleaning the outer surface of the article with a suitable solvent prior to applying the thermosetting resin to the outer surface thereof.

13. A method as claimed in any one of the previous claims wherein the article is cooled down below ambient temperature by placing it in a bath of solid $CO_2$.

14. A method of as claimed in any one of the previous claims wherein the thermosetting resin is cured by placing the overwrapped article under infra-red heater lamps.

15. A thermoplastic article overwrapped with a thermosetting resin in accordance with a method as claimed in anyone of claims 1 to 14.

FIG 1

10

11

11

FIG 2

10

12

FIG 3

10

12

FIG 4

10

11

13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 730 667 (STIEBEL)<br>* Claims 1,4; page 3, lines 11-25; page 5, lines 6-17 * | 1-3,7-11,13-15 | B 29 C 53/84<br>B 32 B 1/08<br>B 29 C 53/56 |
| A | GB-A-2 128 312 (MBB) | 1-3,7-11,13,14 | |
| A | FR-A-2 151 074 (AVCO)<br>* Page 1, lines 23-27; page 3, lines 9-14,27-31; page 4, lines 30-38; page 5, lines 1-7; figures 1-4 * | 1-3,7-11,13,14 | |
| A | DE-A-1 806 108 (DOW)<br>* Page 1, paragraph 2; pages 3,4; page 6, lines 3-5,22-33; page 7, lines 1-3; page 8, line 4 * | 1,2,7,8,11,14,15 | |
| A | DE-A-1 943 820 (MAN)<br>* Page 4, paragraphs 4,5; page 5, paragraphs 1,2 * | 1,2,13 | TECHNICAL FIELDS SEARCHED (Int. Cl.5)<br><br>B 29 C |

The present search report has been drawn up for all claims

| Place of search | Date of completion of the search | Examiner |
|---|---|---|
| THE HAGUE | 29-01-1990 | KUHN E.F.E. |